# EUROPEAN PATENT APPLICATION

(11) **EP 1 990 243 A1**
(43) Date of publication of application: **12.11.2008**
(21) Application number: 07737481.7
(22) Date of filing: 28.02.2007
(51) Int. Cl.: B60R 21/18, B60R 21/02, B60R 21/20, B60R 22/14

(54) **OCCUPANT RESTRAINT SYSTEM**

(30) Priority: 02.03.2006 JP 2006056513
(71) Applicant: TAKATA CORPORATION, Minato-ku, Tokyo 106-8510 (JP)
(72) Inventor: HIGUCHI, Masahiro, Tokyo 106-8510 (JP); ITOGA, Yasuo, Tokyo 106-8510 (JP)
(74) Representative: Vossius & Partner
(86) International application number: PCT/JP2007/053725
(87) International publication number: WO 2007/099984

(57) **Abstract**

An occupant restraining apparatus in which a seat bag and an air belt are inflated by a common inflator and the constitution of which can be simplified. The occupant restraining apparatus includes an inflatable seat bag 20 disposed under the front portion of a seat cushion, and an air belt 30 having an inflatable lap bag 34 to be brought to the front of an occupant. An inflator 40 is installed inside the seat bag 20. One end of a pipe 50 is connected to the seat bag 20, and the other end of the pipe 50 is connected to the air belt 30. When the inflator 40 ejects gas, gas is supplied from the inflator 40 to the inside of the seat bag 20. Next, the gas in the seat bag 20 flows through the pipe 50 into the lap bag 34.

## Description

### Technical Field

The present invention relates to an occupant restraining apparatus for restraining an occupant in a seat of a vehicle such as an automobile at the time of a collision, and more specifically, it relates to an occupant restraining apparatus including an inflatable seat bag disposed inside or under a seat cushion, and an inflatable air belt brought to the front of the occupant, the seat bag and the air belt being inflated by a common inflator.

### Background Art

As a system for restraining an occupant of a vehicle at the time of a collision, there has been proposed an apparatus that elevates the front portion of a seat cushion at the time of a vehicle collision in order to prevent a submarine phenomenon, in which an occupant wearing a seatbelt passes under a lap belt at the time of a front collision of a vehicle. For example, Japanese Unexamined Patent Application Publication No. 10-217818 describes a vehicle seat in which an air bag is disposed under the front portion of a seat cushion, and the front portion of the seat cushion is pressed up by inflating this airbag. (In the present invention, this air bag disposed under the front portion of a seat cushion will be referred to as seat bag).

In addition, there is known an occupant restraining apparatus in which an inflatable air belt (inflatable seat belt) is brought to the front of an occupant in a seat, and at the time of a vehicle collision this air belt is inflated to restrain the occupant to the seat (for example, Japanese Unexamined Patent Application Publication No. 11-334528).

Moreover, Japanese Unexamined Patent Application Publication No. 2002-145002 describes an occupant restraining apparatus in which a seat bag is disposed under the front portion of a seat cushion, an air belt is brought to the front of an occupant, and at the time of a vehicle collision both the seat bag and the air belt are inflated to restrain the occupant.

In the above occupant restraining apparatus of Japanese Unexamined Patent Application Publication No. 2002-145002, a common inflator for inflating the seat bag and the air belt is installed in a side portion of the seat cushion (about midway between the seat bag and the air belt). From this inflator, a gas supply channel (pipe) extends so as to branch into two. One of the two branches is connected to the seat bag, and the other is connected to the air belt.

In this occupant restraining apparatus, when the inflator discharges gas, the gas from the inflator is distributed and supplied through the bifurcated gas supply channel to the seat bag and the air belt. The seat bag and the air belt are inflated with the gas from this common inflator. By this inflated seat bag, the front portion of the seat cushion is pressed up from below, and a submarine phenomenon of the occupant is prevented. By the inflated air belt, the occupant is restrained to the seat.
[Patent Document 1] Japanese Unexamined Patent Application Publication No. 10-217818
[Patent Document 2] Japanese Unexamined Patent Application Publication No. 11-334528
[Patent Document 3] Japanese Unexamined Patent Application Publication No. 2002-145002

Since, in the above occupant restraining apparatus of Japanese Unexamined Patent Application Publication No. 2002-145002, separate gas supply channels are provided from the common inflator to the seat bag and the air belt, the constitution is complex.

### Disclosure of Invention

An object of the present invention is to provide an occupant restraining apparatus in which a seat bag and an air belt are inflated by a common inflator, and whose constitution can be simplified.

In the present invention, an occupant restraining apparatus includes an inflatable seat bag disposed inside or under a seat cushion of a vehicle seat and extending in the left-right width direction of the seat, and an inflatable air belt to be brought to the front of an occupant in the seat, the seat bag and the air belt being inflated by a common inflator. In such an occupant restraining apparatus, the seat bag and the air belt are communicated with each other via a gas flow pipe, and the inflator is disposed inside the seat bag.

### Brief Description of Drawings

[Fig. 1] Fig. 1 is a perspective view of a frame of a vehicle seat having an occupant restraining apparatus according to an embodiment.
[Fig. 2] Fig. 2 is a perspective view of a frame of a vehicle seat having an occupant restraining apparatus according to an embodiment.
[Fig. 3] Fig. 3 is a sectional view taken along line III-III of Fig. 1.
[Fig. 4] Fig. 4 is a perspective view showing a connecting structure between a seat bag and a pipe.
[Fig. 5] Fig. 5 is a perspective view showing a connecting structure between an air belt and a pipe.
[Fig. 6] Fig. 6 is a perspective view of the frame of the seat with the seat bag and the air belt inflated.
[Fig. 7] Fig. 7 is a perspective view of a seat bag portion of an occupant restraining apparatus according another embodiment.
[Fig. 8] Fig. 8 is a sectional view taken along line VIII-VIII of Fig. 7.
[Fig. 9] Fig. 9 is a perspective view of a seat bag portion of an occupant restraining apparatus according still another embodiment.
[Fig. 10] Fig. 10 is a horizontal sectional view of the seat bag portion of the occupant restraining apparatus of Fig. 9.
[Fig. 11] Figs. 11a and 11b show an engaging structure of a pipe with a seat side member in an occupant restraining apparatus according to another embodiment.
[Fig. 12] Figs. 12a and 12b show an engaging structure of a pipe with a seat side member in an occupant restraining apparatus according to another embodiment.
[Fig. 13] Figs. 13a and 13b show an engaging structure of a pipe with a seat side member in an occupant restraining apparatus according to another embodiment.
[Fig. 14] Figs. 14a and 14b show an engaging structure of a pipe with a seat side member in an occupant restraining apparatus according to another embodiment.
[Fig. 15] Fig. 15 is a perspective view showing a fixing structure of a seat bag to a seat pan in an occupant restraining apparatus according to another embodiment.
[Fig. 16] Figs. 16a and 16b illustrate a method for disposing an inflator and a pipe in a seat bag inside an occupant restraining apparatus according to another embodiment.
[Fig. 17] Figs. 17a, 17b, and 17c illustrate a method for disposing an inflator and a pipe inside a seat bag in an occupant restraining apparatus according to another embodiment.
[Fig. 18] Fig. 18 is an exploded perspective view showing the constitution of the pipe of the occupant restraining apparatus of Fig. 17b.
[Fig. 19] Figs. 19a and 19b illustrate a connecting structure between an inflator and a pipe in an occupant restraining apparatus according to another embodiment.
[Fig. 20] Fig. 20 is an exploded perspective view showing a connecting structure between a seat bag side pipe and a connecting pipe in an occupant restraining apparatus according to another embodiment.
[Fig. 21] Fig. 21 is a sectional view in the axial direction of the seat bag side pipe and the connecting pipe of Fig. 20.
[Fig. 22] Fig. 22 is an exploded sectional view of the connecting pipe and a connecting fitting of Fig. 20.
[Fig. 23] Fig. 23 is an exploded perspective view showing another constitution example of an attaching structure of a connecting fitting to a connecting pipe.

### Best Modes for Carrying Out the Invention

In an occupant restraining apparatus of the present invention, an inflator is disposed inside a seat bag, and this seat bag and an air belt are communicated with each other via a pipe. Therefore, when the inflator operates inside the seat bag, gas is supplied from this inflator to the inside of the seat bag, and gas flows through the pipe into the air belt. Therefore, in the present invention, unlike Japanese Unexamined Patent Application Publication No. 2002-145002, it is not necessary to provide separate gas supply channels from this common inflator to the seat bag and the air belt, and the constitution of the occupant restraining apparatus can be simplified.

With gas from this common inflator, the seat bag inflates. The front portion of a seat cushion is pressed up or compressed and hardened by this seat bag. The waist of an occupant is thereby prevented or restrained from moving forward. In addition, the air belt inflates, and the occupant is thereby restrained to the seat.

In the present invention, gas may be supplied from the inflator to the seat bag, and the gas in the seat bag may flow via the pipe into the air belt.

In this case, when the inflator operates, gas is ejected from this inflator directly in the seat bag. With this gas, the seat bag inflates. The gas in the seat bag flows through the pipe into the air belt, thereby inflating the air belt. In this case, it is not necessary to connect the pipe to the inflator, and the constitution of the occupant restraining apparatus can be extremely simplified.

The pipe may connect only the seat bag and the air belt. In this case, the constitution of the occupant restraining apparatus can be further simplified.

In the present invention, one end of the pipe may be disposed inside the seat bag, the inflator may be connected to the one end of the pipe, and an outlet through which gas flows into the seat bag may be provided in a portion of the pipe inside the seat bag.

In this case, when the inflator operates, gas is supplied from this inflator into the pipe. Part of this gas flows through the outlet into the seat bag, and the rest is introduced through the pipe into the air belt. Since the gas from the inflator is supplied to the seat bag and the air belt through the single pipe extending from the inside of the seat bag to the air belt, the constitution of the occupant restraining apparatus can be simplified.

In the present invention, at least one of the inflator and the pipe may be provided with a positioning means with which positioning of the pipe in the circumferential direction relative to the inflator is performed when the inflator and the pipe are connected.

By providing a positioning means with which positioning of the pipe in the circumferential direction relative to the inflator is performed when the inflator and the pipe are connected, the pipe and the inflator can be easily connected with the gas outlet of the pipe facing in a predetermined direction relative to the inflator.

In the present invention, the positioning means may include a projection provided in one of the inflator and the pipe, and a depression provided in the other and to be engaged with the projection.

By providing one of the inflator and the pipe with a projection and providing the other with a depression with which the projection is to be engaged, the pipe can be easily positioned relative to the inflator with a simple constitution.

In the present invention, the inflator may be provided with a male screw portion, a gas ejecting portion may be provided at the distal end of the male screw portion, a female screw portion into which the male screw portion is to be screwed may be provided on the inner peripheral surface of the one end of the pipe, the inflator and the pipe may be connected by screwing the male screw portion into the female screw portion, a pipe-fixing nut may be screwed at the proximal end of the male screw portion, and the pipe may be fixed so as not to rotate around the axis of the male screw portion by tightening the nut toward the pipe.

In this case, screwing the male screw portion (gas ejecting portion) of the inflator into the female screw portion of the pipe is stopped when the gas outlet of the pipe faces in a predetermined direction relative to the inflator. Next, the pipe-fixing nut is tightened toward the pipe like a so-called double nut. In this way, the pipe can be fixed with the gas outlet facing in a predetermined direction relative to the inflator. In this case, the pipe can be fixed with the gas outlet facing in a desired direction.

In the present invention, the pipe may pass through the seat bag in the direction in which the seat bag extends, both ends of the seat bag in its extending direction may be fixed to the pipe, the inflator may be installed in the pipe, and an outlet through which gas flows into the seat bag may be provided in a portion of the pipe inside the seat bag.

In this case, when the inflator operates, gas is supplied from this inflator to the inside of the pipe. Part of this gas flows through the outlet into the seat bag, and the rest is introduced through the pipe into the air belt. Therefore, the gas from the inflator can be supplied to the seat bag and the air belt through the single pipe extending from the inside of the seat bag to the air belt.

In this case, the pipe passes through the seat bag in the direction in which the seat bag extends, both ends of the seat bag in its extending direction are fixed to the pipe, and the inflator is installed in the pipe. Therefore, the pipe, the seat bag, and the inflator can be attached to the seat with a common attaching member, and the constitution and assembling work of the occupant restraining apparatus can be simplified.

In the present invention, a seat side member may be provided with an engaging portion with which the pipe engages. This can facilitate the pipe installation work.

The engaging portion may be a groove, due to which the pipe can be easily engaged with the engaging portion.

The groove may taper and become narrower than the diameter of the pipe toward the bottom. In this case, when the pipe is pressed into the groove, the pipe is sandwiched by both side surfaces of the groove at the bottom of the groove, and thereby the pipe is fixed.

At least one of the side surfaces of the groove may be provided with a projection hanging over the pipe disposed in the groove.

In this case, at least one of the side surfaces of the groove is provided with a projection. When the pipe is pressed into the groove, the projection hangs over the pipe. This blocks the pipe from coming out of the groove, and holds the pipe in the groove.

At least part of the pipe may be a small diameter portion having a diameter smaller than the diameter of other parts of the pipe, and the groove may have a size that allows the small diameter portion of the pipe to enter but does not allow the parts other than the small diameter portion to enter.

In this case, the pipe is engaged in such a manner that the small diameter portion provided in the pipe is engaged with the groove. Since the groove has a size that does not allow the parts other than the small diameter portion (large diameter portions) to enter, the pipe cannot move in its extending direction and is fixed at a predetermined position.

In the present invention, the pipe may include at least a seat bag side pipe connected to the seat bag, an air belt side pipe connected to the air belt, and a connecting pipe connecting the seat bag side pipe and the air belt side pipe.

In the case where the pipe include at least a seat bag side pipe connected to the seat bag, an air belt side pipe connected to the air belt, and a connecting pipe connecting these, the seat bag and the air belt can be installed in the seat by separately installing the seat bag and the air belt in the seat and thereafter connecting these with the connecting pipe. Compared to installing the seat bag and the air belt connected with a pipe, installation can be performed more efficiently.

A positioning means with which positioning of one of the seat bag side pipe and the connecting pipe in the circumferential direction relative to the other is performed when the pipes are connected, may be provided. This makes it possible to easily connect the seat bag side pipe and the connecting pipe.

In this case, it is possible to provide a projection in one of the seat bag side pipe and the connecting pipe, and to provide a depression with which the projection is to be engaged, in the other. This makes it possible to easily perform positioning of these with a simple constitution.

The embodiments of the present invention will now be described with reference to the drawings.

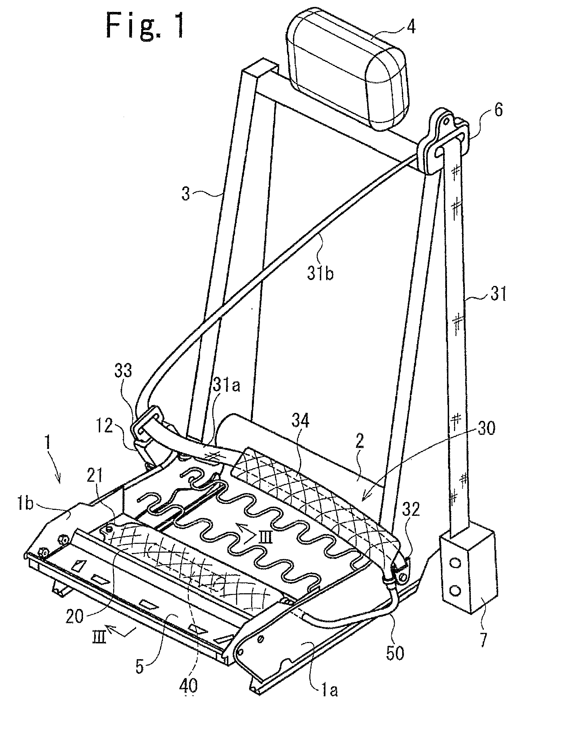

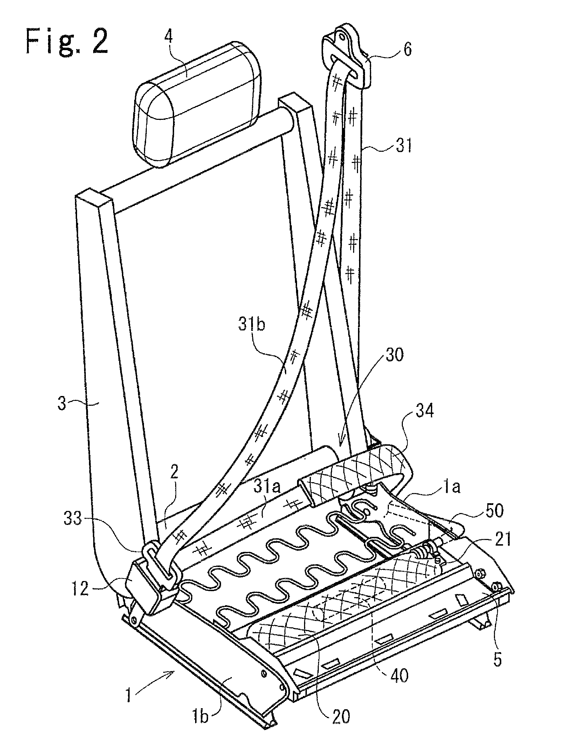

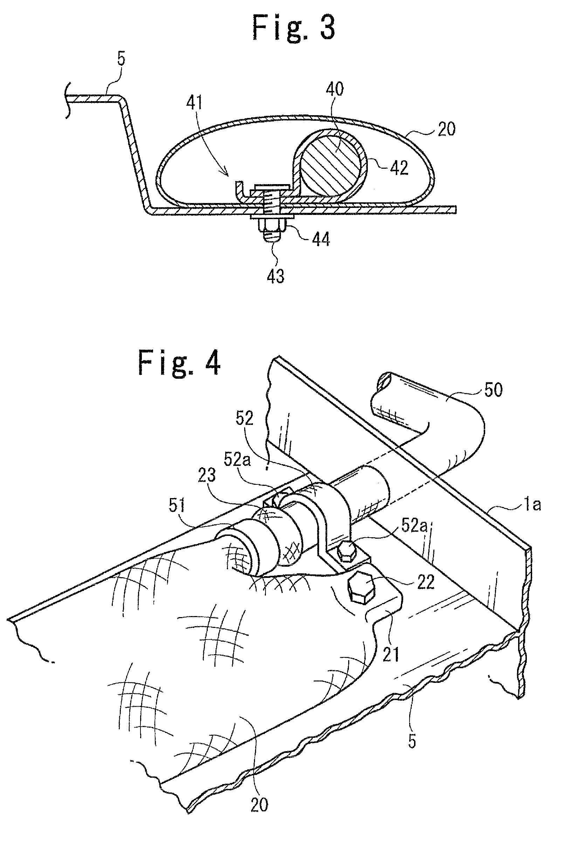

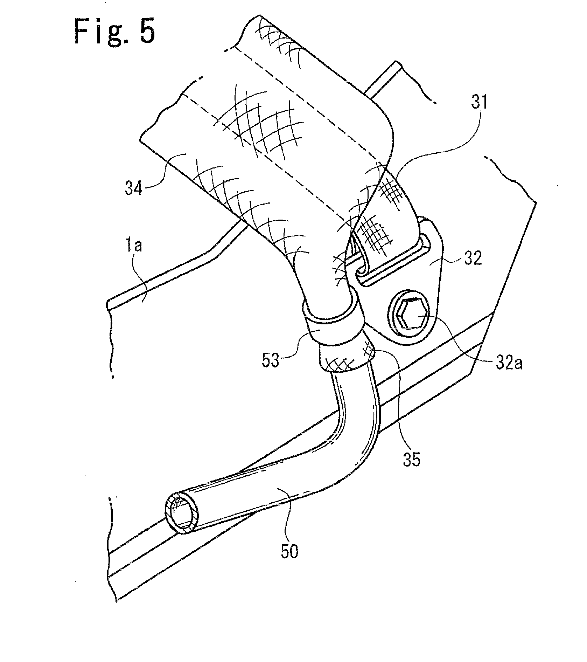

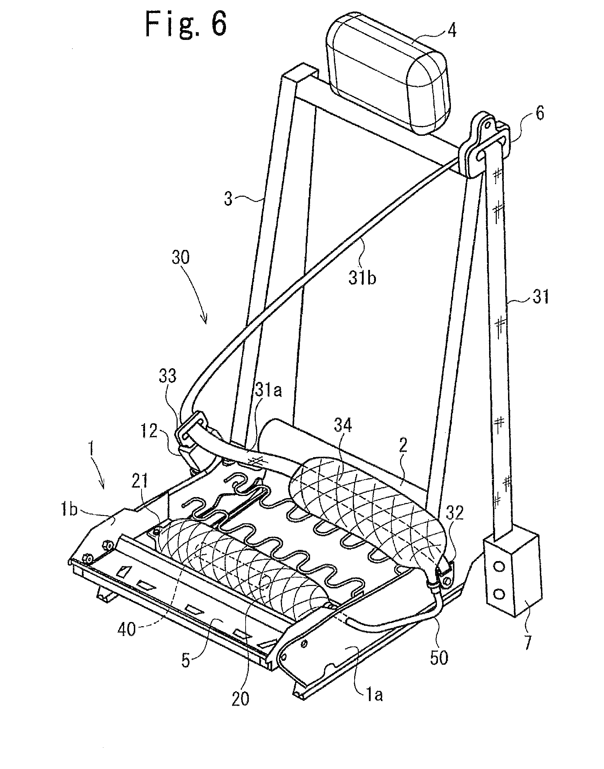

Figs. 1 and 2 are perspective views of a frame of a vehicle seat having an occupant restraining apparatus according to an embodiment. Fig. 3 is a sectional view taken along line III-III of Fig. 1. Fig. 4 is a perspective view (enlarged view) showing a connecting structure between a seat bag and a gas flow pipe. Fig. 5 is a perspective view (enlarged view) showing a connecting structure between an air belt and the gas flow pipe. Fig. 6 is a perspective view of the frame of the seat with the seat bag and the air belt inflated.

A frame of an automobile seat includes a base frame 1 and a back frame 3 rotatably joined to the base frame 1 via a support shaft 2 and a reclining device (not shown). A headrest 4 is mounted on the upper portion of the back frame 3.

The base frame 1 includes left and right side frames 1a and 1b and a seat pan 5 disposed between the front portions of the side frames 1a and 1b.

An inflatable seat bag 20 is disposed on the seat pan 5. The seat bag 20 extends in the left-right width direction of the seat. Auriform fixing pieces 21, 21 are provided at both ends of the seat bag 20 in the longitudinal direction (left-right width direction). The fixing pieces 21, 21 are fastened to the seat pan 5 with bolts 22 (Fig. 4).

Although not shown, the seat bag 20 includes a bag body folded in an elongate shape and a cylindrical mesh webbing surrounding the folded bag body. The mesh webbing is constructed of a woven fabric that stretches well in the radial direction but hardly stretches in the longitudinal direction (the left-right direction of the seat).

Inside this seat bag (bag body) 20, an inflator (gas emitter) 40 is installed. In this embodiment, the inflator 40 is rod-shaped, and disposed so as to extend in the longitudinal direction of the seat bag 20. This inflator 40 has a gas outlet (not shown) in the side peripheral surface thereof. When the inflator 40 operates, gas is ejected from this gas outlet in the radial direction (the direction of the diameter of the seat bag 20).

As shown in Fig. 3, a retainer 41 is attached to this inflator 40. Reference numeral 42 denotes a bracket connecting the inflator 40 and the retainer 41. A stud bolt 43 is projecting from the retainer 41 downward. This stud bolt 43 is passed through bolt holes (not shown) provided in the bottom surface of the seat bag 20 and the seat pan 5, a nut 44 is tighten onto the stud bolt 43, and thereby the retainer 41 is fixed to the seat pan 5. In addition, between the retainer 41 and the seat pan 5, the bottom surface at the middle in the longitudinal direction of the seat bag 20 is sandwiched.

As shown in Fig. 4, a gas outlet 23 is provided at one end in the longitudinal direction (on the side frame 1a side in this embodiment) of the seat bag 20. To this gas outlet 23 is connected one end of a gas flow pipe 50 that connects the seat bag 20 and a below-described lap bag 34 (air belt 30).

In this embodiment, the one end of the pipe 50 is inserted into the gas outlet 23, and the periphery of the gas outlet 23 is bound to the outer peripheral surface of the pipe 50 with a band 51. As shown, a portion of the pipe 50 near the junction with the gas outlet 23 is fixed to the seat pan 5 with a fixing fitting 52 (and bolts 52a that fix the fixing fitting 52 to the seat pan 5).

This pipe 50 extends from the inner side (seat pan 5 side) of the side frame 1a, through a pipe insertion hole (not shown) provided in the side frame 1a, to the outer side of the side frame 1a and then extends along the side frame 1a toward the rear of the seat.

In this embodiment, the pipe 50 is a flexible hose.

As described above, a webbing 31 of an air belt 30 is to be brought to the front of the back frame 3. The webbing 31 is made of a normal uninflatable belt material. A lap anchor 32 is attached to one end of the webbing 31. The middle of the webbing 31 is passed through the through anchor (not shown) of a tongue 33. The other end of the webbing 31 is passed through a shoulder anchor 6 provided in the upper portion of a side surface (for example, a pillar) of the vehicle interior, and is retractably connected to a seatbelt retractor 7. The retractor 7 is provided with a pretensioner (not shown), which retracts the webbing 31 by a predetermined length to tighten the webbing 31 in an emergency such as a vehicle collision.

The lap anchor 32 is attached to the side frame 1a with a fitting shaft 32a (Fig. 5). This fitting shaft 32a allows the lap anchor 32 to rotate toward the front and rear of the seat.

On the vehicle-interior-center side of the base frame 1 (on the outer side of the side frame 1b in this embodiment) is provided a buckle unit 12 to which the tongue 33 is detachably joined. When the tongue 33 is joined to the buckle unit 12, the webbing 31 includes a lap portion 31a between the tongue 33 and the lap anchor 32, and a shoulder portion 31b between the tongue 33 and the shoulder anchor 6. The lap portion 31a is disposed along the front surface of the waist or stomach of an occupant in the seat. The shoulder portion 31b is disposed along the front surface of the upper body of the occupant.

An inflatable lap bag 34 is provided along the lap portion 31a.

Although not shown, this lap bag 34 includes of an inflatable bag body disposed along the lap portion 31a and a cylindrical cover that covers the bag body and the lap portion 31a. The bag body is normally folded into an elongate and flat state along the lap portion 31a. In this embodiment, when the bag body is not inflated, the cover has a size that fits the outer periphery of the folded bag body. When the bag body is inflated, the cover stretches in the circumferential direction so as to allow the bag body to inflate.

In this embodiment, the cover is constructed of a woven fabric similar to the mesh webbing of the seat bag 20 that stretches well in the circumferential direction but hardly stretches in the longitudinal direction (the direction in which the lap portion 31a extends). Therefore, when the bag body is inflated, the mesh of the cover expands in the circumferential direction as the cover stretches in the circumferential direction, resulting in a decrease in the length of the cover. Thus, the webbing 31 is tightened and comes into close contact with the body of the occupant.

As shown in Fig. 5, a gas inlet 35 is provided at the lap anchor 32 side end of the lap bag 34 (bag body). To this gas inlet 35, the other end of the pipe 50 is connected. In this embodiment, the other end of the pipe 50 is inserted into the gas inlet 35, and the periphery of the gas inlet 35 is bound to the outer peripheral surface of the pipe 50 with a band 53.

A portion of the pipe 50 near the junction with the gas inlet 35 is joined to the lap anchor 32 via a joining member (not shown). Since this pipe 50 is a flexible hose as described above, if the lap anchor 32 rotates around the fitting shaft 32a, the pipe 50 bends following the rotation of the lap anchor 32, and the communication between the seat bag 20 and the lap bag 34 is constantly maintained.

The occupant restraining apparatus having such a constitution operates as follows.

In an emergency such as a vehicle collision, the inflator 40 ejects gas and the pretensioner of the retractor 7 retracts the webbing. The gas from the inflator 40 is ejected into the seat bag 20 and then flows from the inside of the seat bag 20 through the pipe 50 into the lap bag 34. Thus, the seat bag 20 and the lap bag 34 are inflated.

Since the inflated seat bag 20 presses the seat cushion upward, the front portion of the seat cushion is pressed up or hardened, and thereby the waist of the occupant is prevented from moving forward.

The pretensioner retracts the webbing 31, the lap bag 34 is decreased in length as it inflates, and thereby the entire air belt 30 (webbing 31) is tightened and comes into close contact with the body of the occupant. As a result, the femoral region and the waist of the occupant are firmly restrained to the seat by the nipping effect of the air belt 30 and the front portion of the seat cushion pressed up or hardened by the seat bag 20. At this time, the inflated lap bag 34 absorbs the impact to the waist or the stomach of the occupant.

Since, in this occupant restraining apparatus, it is not necessary to provide the seat bag 20 and the lap bag 34 with separate gas supply channels from the inflator 40, the constitution can be simplified.

Since, in this embodiment, the pipe 50 that guides the gas in the seat bag 20 to the lap bag 34 is a single pipe that simply connects the seat bag 20 and the lap bag 34, the constitution is extremely simple.

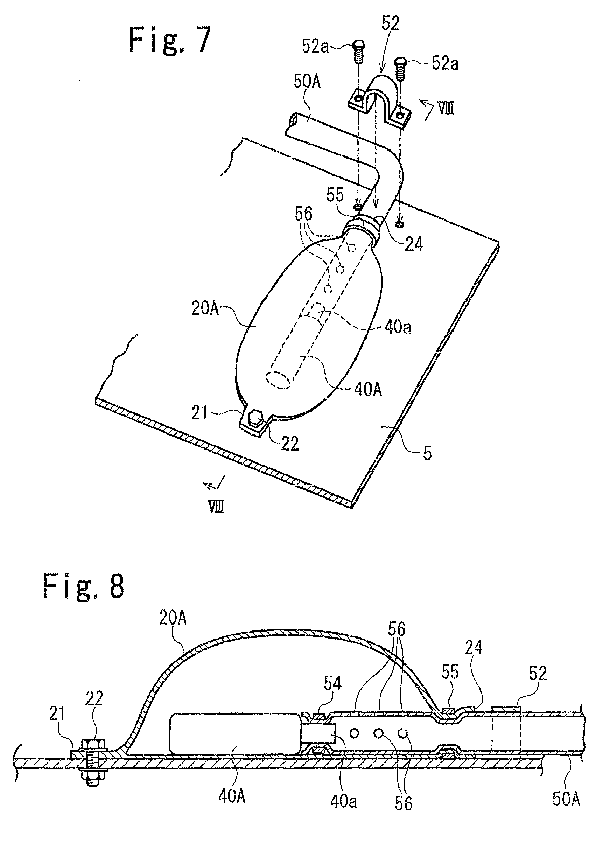

Fig. 7 is a perspective view of a seat bag portion of an occupant restraining apparatus according to another embodiment. Fig. 8 is a sectional view taken along line VIII-VIII of Fig. 7.

In this embodiment, a seat bag 20A is disposed on the seat pan 5 so as to extend in the left-right width direction of the seat. One end of a pipe 50A is inserted into the seat bag 20A from one end of the seat bag 20A in its extending direction. To the end thereof, an inflator 40A is connected.

As shown in Fig. 8, in this embodiment, the inflator 40A is rod-shaped. A nozzle 40a is projecting from one end (the front end) of the inflator 40A. The inflator 40A is configured to eject gas from the front end of the nozzle 40a in the direction of the axis thereof. The nozzle 40a is inserted into one end of the pipe 50A. The pipe 50A is bound to the nozzle 40a with a band 54.

As shown, in this embodiment, a pipe insertion hole 24 is provided at the one end of the seat bag 20A. A combination of the inflator 40A and the pipe 50A is inserted into the seat bag 20A through the pipe insertion hole 24. The periphery of the pipe insertion hole 24 is bound to the outer peripheral surface of the pipe 50A with a band 55.

In this embodiment, only the other end of the seat bag 20A is provided with a fixing piece 21 for fixing to the seat pan 5. When the seat bag 20A is fixed to the seat pan 5, the fixing piece 21 is fastened to the seat pan 5 with a bolt 22, and a portion of the pipe 50A near the junction with the pipe insertion hole 24 is fastened to the seat pan 5 with a fixing fitting 52. Reference numeral 52a denotes bolts that fix the fixing fitting 52 to the seat pan 5.

At least one gas outlet 56 as an outlet for causing gas from the inflator 40A to flow into the seat bag 20A is provided in the outer peripheral surface of a portion of the pipe 50A disposed inside the seat bag 20A (between the bands 54 and 55). In this embodiment, the at least one gas outlet 56 include a plurality of gas outlets 56 that differ in position in the extending direction and the circumferential direction of the pipe 50A.

As shown, the combination of one end of the pipe 50A and the inflator 40A extends in the extending direction of the seat bag 20A (the left-right width direction of the seat) inside the seat bag 20A. The pipe 50A extends from one end of the seat bag 20A to the side of the seat pan 5, and thereafter extends toward the rear of the seat. The other end is connected to a lap bag 34 (not shown in Figs. 7 and 8) of the air belt 30.

In other respects, the occupant restraining apparatus of this embodiment is the same as the occupant restraining apparatus of Figs. 1 to 6.

In this occupant restraining apparatus, when the inflator 40A ejects gas, gas is supplied from the inflator 40A to the inside of the pipe 50A. Part of this gas flows through the gas outlets 56 into the seat bag 20A, the rest is supplied through the pipe 50A to the lap bag 34. In this way, the seat bag 20A and the lap bag 34 are inflated.

In this occupant restraining apparatus, the gas from the inflator 40A is supplied to the seat bag 20A and the lap bag 34 through the single pipe 50A extending from the inside of the seat bag 20A to the lap bag 34. Therefore, the occupant restraining apparatus has a simple constitution.

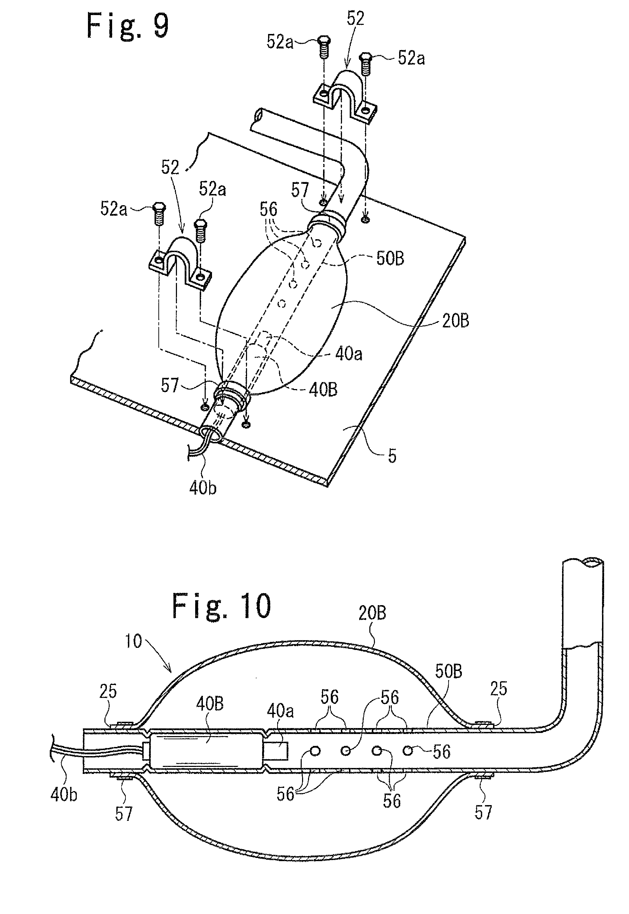

Fig. 9 is a perspective view of a seat bag portion of an occupant restraining apparatus according to still another embodiment. Fig. 10 is a horizontal sectional view t of the seat bag portion.

In this embodiment, a seat bag 20B is disposed on the seat pan 5 so as to extend in the left-right width direction of the seat. A pipe 50B is provided so as to pass through the seat bag 20B in the left-right width direction. An inflator 40B is installed inside the pipe 50B.

As shown in Fig. 10, pipe insertion holes 25 are provided at both ends of the seat bag 20B in its extending direction. The pipe 50B passes through both the pipe insertion holes 25, 25 and the seat bag 20B. The peripheries of both the pipe insertion holes 25, 25 are bound to the outer peripheral surface of the pipe 50B with bands 57. One end of this pipe 50B extends from one end of the seat bag 20B to the side of the seat pan 5, thereafter extends toward the rear of the seat, and is connected to a lap bag 34 (not shown in Figs. 9 and 10) of the air belt 30. The other end of the pipe 50B extends from the other end of the seat bag 20B by a length sufficient to attach a below-described fixing fitting 52.

In this embodiment, the inflator 40B is rod-shaped and has an outside diameter equal to or slightly smaller than the inside diameter of the pipe 50B. A nozzle 40a is projecting from one end (the front end) of the inflator 40B. This inflator 40B is also configured to eject gas from the nozzle 40a in the direction of the axis thereof.

This inflator 40B is inserted, the nozzle 40a first, into the pipe 50B through the other end of the pipe 50B. Reference numeral 40b denotes a conducting harness extending from the rear end of the inflator 40B. This harness 40b is pulled out of the other end of the pipe 50B and is connected to a control unit (not shown).

To fix this inflator 40B in the pipe 50B, a portion of the pipe 50B adjacent to the edge (periphery) of the front end of the inflator 40B and a portion of the pipe 50B adjacent to the edge (periphery) of the rear end of the inflator 40B are caulked. These caulked portions are in close contact with the entire edges, thereby sealing the other end of the pipe 50B.

At least one gas outlet 56 as an outlet for causing gas from the inflator 40B to flow into the seat bag 20B is provided in the outer peripheral surface of a portion of the pipe 50B disposed inside the seat bag 20B (between the caulked portion at the front end of the inflator 40B and the band 57 at the one end of the seat bag 20B). Also in this embodiment, the at least one gas outlets 56 include a plurality of gas outlets 56 that differ in position in the extending direction and the circumferential direction of the pipe 54B.

As shown in Fig. 9, in this embodiment, portions of the pipe 50B extending from both ends of the seat bag 20B are fixed to the seat pan 5 with fixing fittings 52. Reference numeral 52a denotes bolts that fix the fixing fittings 52 to the seat pan 5.

In other respects, the occupant restraining apparatus of this embodiment is the same as the occupant restraining apparatuses of the above-described embodiments.

Also in this occupant restraining apparatus, when the inflator 40B ejects gas, gas is supplied from the inflator 40B to the inside of the pipe 50B. Part of this gas flows through the gas outlets 56 into the seat bag 20B, the rest is supplied through the pipe 50B to the lap bag 34. In this way, the seat bag 20B and the lap bag 34 are inflated.

Also in this occupant restraining apparatus, the gas from the inflator 40B is supplied to the seat bag 20B and the lap bag 34 through the single pipe 50B extending from the inside of the seat bag 20B to the lap bag 34. Therefore, the occupant restraining apparatus has a simple constitution.

In this embodiment, the pipe 50B passes through the seat bag 20B in its extending direction. Both ends of the seat bag 20B are fixed to the pipe 50B. An inflator 40B is installed inside the pipe 50B. Therefore, the pipe 50B, the seat bag 20B, and the inflator 40B can be installed in the seat pan 5 with common fixing fittings 52, and the constitution and assembling work of the occupant restraining apparatus can be simplified.

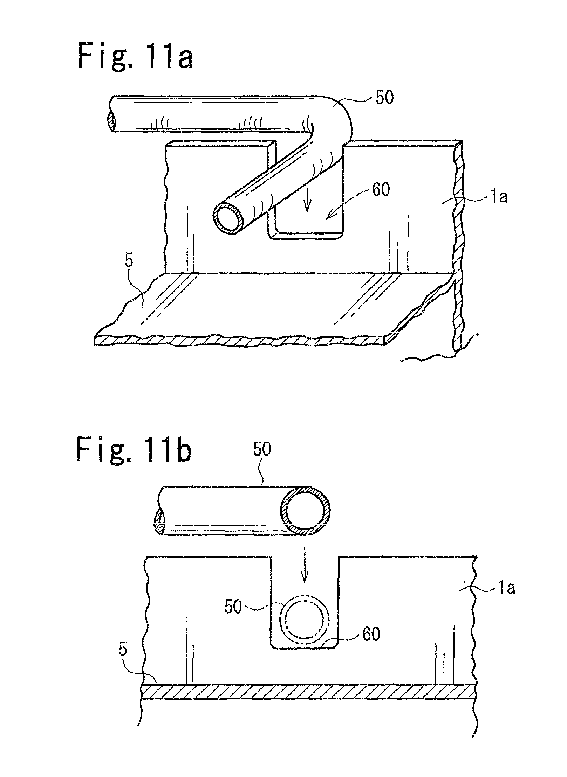

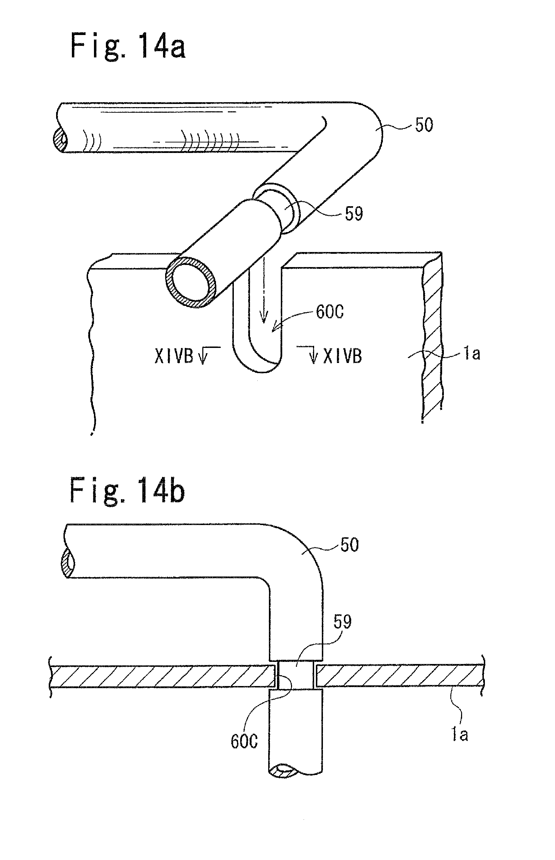

In the above-described embodiment, the pipe 50 is inserted into a pipe insertion hole provided in the side frame 1a of the seat. However, the engaging structure of the pipe with the side frame 1a (seat side member) is not limited to this. Figs. 11a to 14b show other examples of the engaging structure of the pipe with the side frame 1a. Figs. 11a, 12a, 13a, and 14a are perspective views of pipe engaging portions of the side fame 1a and their vicinities as seen from the seat pan 5 side. Figs. 11b, 12b, and 13b are elevational views of the pipe engaging portions as seen from the seat pan 5 side. Fig. 14b is a sectional view taken along line XIVB-XIVB of Fig. 14a.

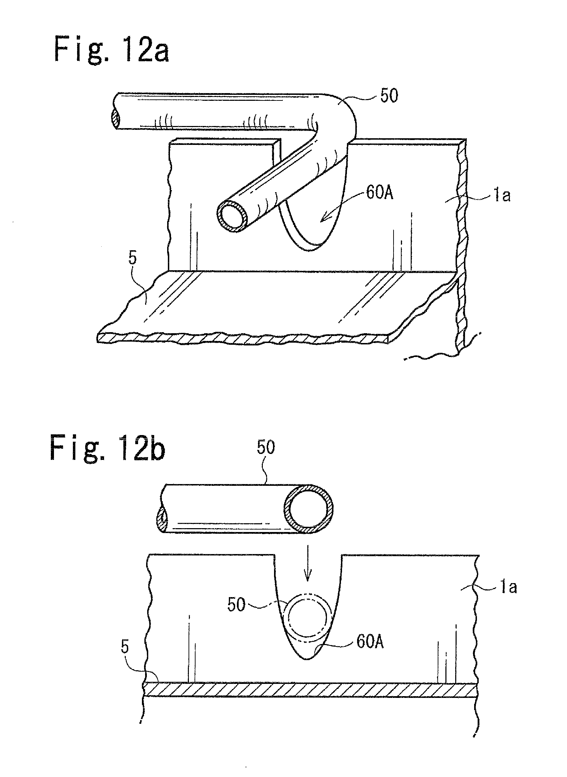

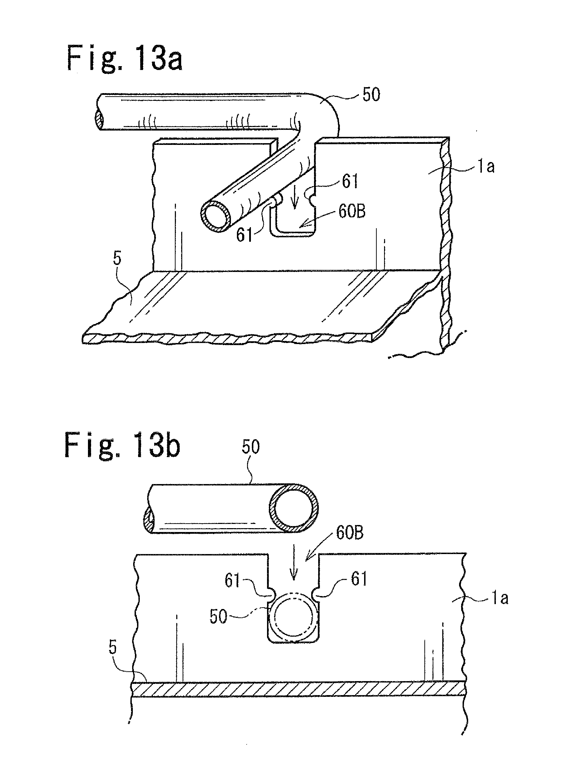

In the embodiments of Figs. 11a to 14b, grooves 60 (Figs. 11a and 11b), 60A (Figs. 12a and 12b), 60B (Figs. 13a and 13b), and 60C (Figs. 14a and 14b) serving as engaging portions with the pipe 50 are formed by cutting out the side frame 1a from the upper end thereof downward.

The groove 60 of Figs. 11a and 11b has substantially the same width from the upper end (entrance) to the lower end (bottom), and the width is slightly larger than the diameter of the pipe 50.

Since, in this embodiment, the groove 60 opens upward, the pipe 50 can be easily engaged with the groove 60 by dropping the pipe 50 into the groove 60 from above. This engagement of the pipe 50 with the groove 60 can be performed even when the seat bag 20 and the air belt 30 (lap bag 34) are already connected to both ends of the pipe 50, or connecting members for connecting to the seat bag 20 and the air belt 30 are already attached to both ends of the pipe 50.

As shown, the groove 60A of Figs. 12a and 12b is tapers toward the bottom. Specifically, the width of the groove 60A is larger than the diameter of the pipe 50 at the entrance, is equal to the diameter of the pipe 50 at the middle in the depth direction (vertical direction), and is smaller than the diameter of the pipe 50 at the bottom.

In the case of the groove 60A having such a constitution, when the pipe 50 is pressed into the groove 60A from above, the pipe 50 is wedged between both side surfaces of the groove 60A at the bottom of the groove 60A as shown by two-dot chain line in Fig. 12b, and the pipe 50 is fixed in the groove 60A. That is, in this embodiment, by just pressing the pipe 50 into the groove 60A, the pipe 50 can be engaged with the side frame 1a.

The groove 60B of Figs. 13a and 13b has a constitution in which projections 61 are projecting from both side surfaces thereof into the groove 60B. As shown in Fig. 13b, the protrusions 61 are provided so as to hang over the pipe 50 when the pipe 50 is disposed at the bottom of the groove 60B. The distance between the distal ends of the protrusions 61, 61 is slightly smaller than the diameter of the pipe 50. The groove 60B has substantially the same width from the entrance to the bottom except for the protrusions 61, and the width is larger than the diameter of the pipe 50.

To engage the pipe 50 with the groove 60B having such a constitution, the pipe 50 is pressed from above into the groove 60B (beyond the protrusions 61) while elastically deforming the pipe 50 or the protrusions 61. Thus, as shown in Fig. 13b, the protrusions 61 hang over the pipe 50, and the pipe 50 is thereby prevented from coming out of the groove 60B. The pipe 50 is thereby held in the groove 60B. Therefore, also in this embodiment, by just pressing the pipe 50 into the groove 60B, the pipe 50 can be easily engaged with the side frame 1a.

In the embodiment of Figs. 14a and 14b, a small diameter portion 59 having a diameter smaller than those of other portions is formed at the middle of the pipe 50 in its extending direction (at the portion to be engaged with the side frame 1a). The groove 60C of this embodiment allows only the small diameter portion 59 of the pipe 50 to enter. That is, as shown in Fig. 14b, the width of the groove 60C is slightly larger than the diameter of the small diameter portion 59 and smaller than the diameter of the portions (large diameter portions) other than the small diameter portion 59 of the pipe 50.

In this embodiment, the pipe 50 is engaged with the groove 60C at the small diameter portion 59. Since this groove 60C does not allow the portions other than the small diameter portion 59 of the pipe 50 to enter, the pipe 50 cannot move in its extending direction in the groove 60C, and is locked at a predetermined position. That is, also in this embodiment, by just putting the small diameter portion 59 into the groove 60C, the pipe 50 can be easily engaged with the side frame 1a.

Of course, also in the embodiments of Figs. 12a to 14b, as in the embodiment of Figs. 11a and 11b, the pipe 50 can be engaged with the grooves 60A, 60B, and 60C even when the seat bag 20 and the air belt 30 (lap bag 34) are already connected to both ends of the pipe 50, or connecting members for connecting to the seat bag 20 and the air belt 30 are attached to both ends of the pipe 50.

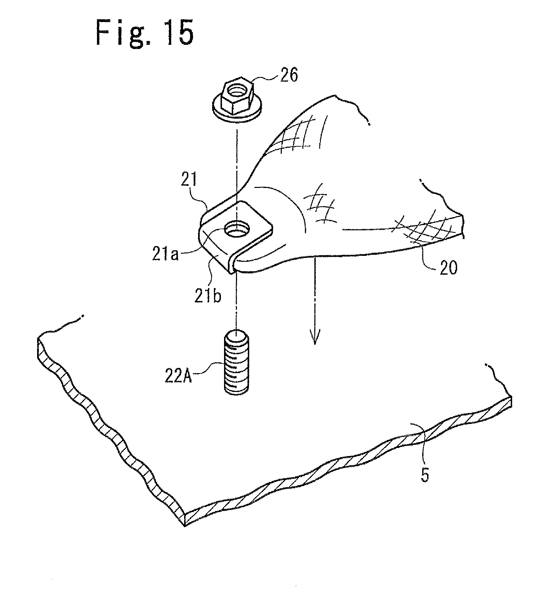

In the above-described embodiments, when the seat bag 20 is fixed to the seat pan 5, a bolt 22 is inserted so as to pass through the fixing piece 21 of the seat bag 20 and the seat pan 5, and a nut is tightened from the bottom of the seat pan 5 (this nut may be beforehand fixed to the seat pan 5 by welding, for example). However, the fixing structure of the seat pan 20 is not limited to this. Fig. 15 shows another constitution example of the fixing structure of the seat bag 20. Fig. 15 is a perspective view of one end of the seat bag 20 fixed to the seat pan 5, and its vicinity.

In the embodiment of Fig. 15, a stud bolt 22A is projecting from the seat pan 5 upward. When the seat bag 20 is fixed to the seat pan 5, this stud bolt 22A is inserted into a bolt insertion hole 21a provided in the fixing piece 21 of the seat bag 20 to engage the fixing piece 21 with the stud bolt 22A, and thereafter a nut 26 is tightened on this stud bolt 22A from above. Reference numeral 21b denotes a washer attached to the fixing piece 21a.

In this embodiment, when the seat bag 20 is fixed to the seat pan 5, the fixing piece 21 of the seat bag 20 is engaged with the stud bolt 22A projecting from the seat pan 5. Therefore, positioning of the seat bag 20 relative to the seat pan 5 can be easily performed, and fixing of the fixing piece 21 with the nut 26 can also be easily performed.

In this embodiment, a fixing structure of the fixing piece 21 of the seat bag 20 is shown. However, the pipe fixing fitting 52 in the above-described embodiment may also be fixed to the seat pan 5 by fixing the fixing fitting 52 by a nut to a stud bolt projecting from the seat pan 5.

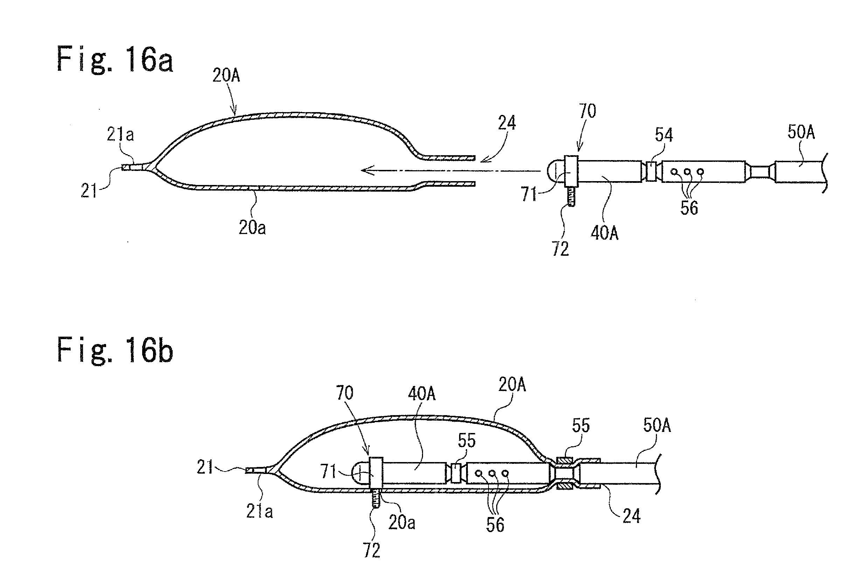

Figs. 16a and 16b illustrate a method for disposing an inflator and a pipe into a seat bag according to another embodiment. Fig. 16a shows a state before an inflator and a pipe are disposed inside a seat bag. Fig. 16b shows a state after the inflator and the pipe are disposed inside the seat bag. In the figures, the seat bag is shown in longitudinal cross section.

This embodiment is a modification of the embodiment of Figs. 7 and 8 in which a pipe 50A is inserted into the seat bag 20A through a pipe insertion hole 24 at one end of the seat bag 20A, and an inflator 40A is connected to the end thereof.

In this embodiment, the inflator 40A is provided with a fixing member 70 for fixing the inflator 40A to the seat pan 5 from the inside of the seat bag 20A. This fixing member 70 has a clamp portion 71 fitted on the outer peripheral surface of the rear end (opposite the nozzle 40a (not shown in Figs. 16a and 16b (see Figs. 7 and 8)) of the inflator 40A, and a stud bolt 72 projecting from the clamp portion 71 downward. At the middle of the bottom surface of the seat bag 20A in its extending direction is provided a bolt insertion hole 20 through which the stud bolt 72 is passed. In addition, the seat pan 5 (not shown) is also provided with a bolt insertion hole (not shown) corresponding to the bolt insertion hole 20a.

In other respects, this embodiment is the same as the embodiment of Figs. 7 and 8. In Figs. 16a and 16b, the same reference numerals are used to designate the same components as those in Figs. 7 and 8.

In this embodiment, as shown in Fig. 16a, the inflator 40A and the pipe 50A are connected and the fixing member 70 is attached to the rear end of the inflator 40A in advance. Next, through the pipe insertion opening 24 at one end of the seat bag 20A, the combination of the inflator 40A with the fixing member 70 and the pipe 50A is inserted into the seat bag 20A, the rear end of the inflator 40A first. Thereafter, as shown in Fig. 16b, the stud bolt 72 of the fixing member 70 is passed through the bolt insertion hole 20a in the bottom surface of the seat bag 20A so as to extend toward the outside of the seat bag 20A, and the periphery of the pipe insertion opening 24 is bound to the outer peripheral surface of the middle portion of the pipe 50A with a band 55.

Thereafter, this seat bag 20A is disposed on the seat pan 5, the fixing piece 21 at the other end of the seat bag 20A is fixed to the seat pan 5 with a bolt 22 (not shown), and at the one end of the seat bag 20A, the middle portion of the pipe 50A is fixed to the seat pan 5 using a fixing fitting 52 (not shown). This method for fixing both ends of the seat bag 20A is the same as that in the embodiment of Figs. 7 and 8. In this embodiment, in addition, a stud bolt 72 projecting outward from the bottom surface of the seat bag 20A is passed through the bolt insertion hole of the seat pan 5, and a nut (not shown) is tightened onto the stud bolt 72 from the undersurface of the seat pan 5.

In this way, installation of the seat bag 20A, the inflator 40A, and the pipe 50A to the seat pan 5 is completed.

Since, in this embodiment, the inflator 40A is also fixed to the seat pan 5 with the fixing member 70, the inflator 40A is prevented from coming loose and being displaced inside the seat bag 20A. In addition, the pipe 50A is thereby prevented from bending inside the seat bag 20A.

In this embodiment, the single fixing member 70 is attached to the inflator 40A. However, two or more fixing members may be attached. A plate-shaped fixing member like the retainer 41 in the embodiment of Figs. 1 to 6 may be attached.

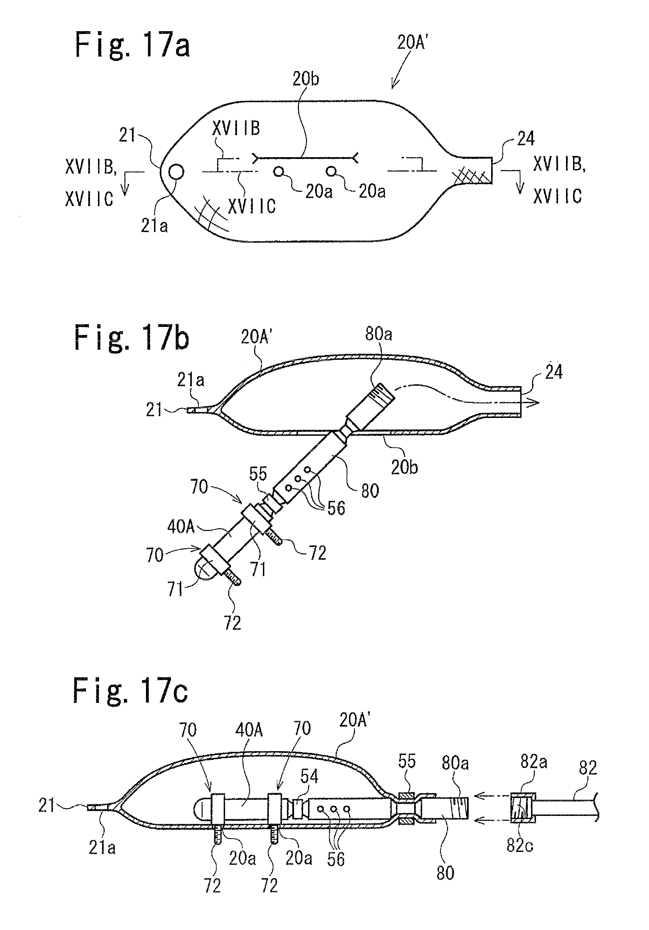

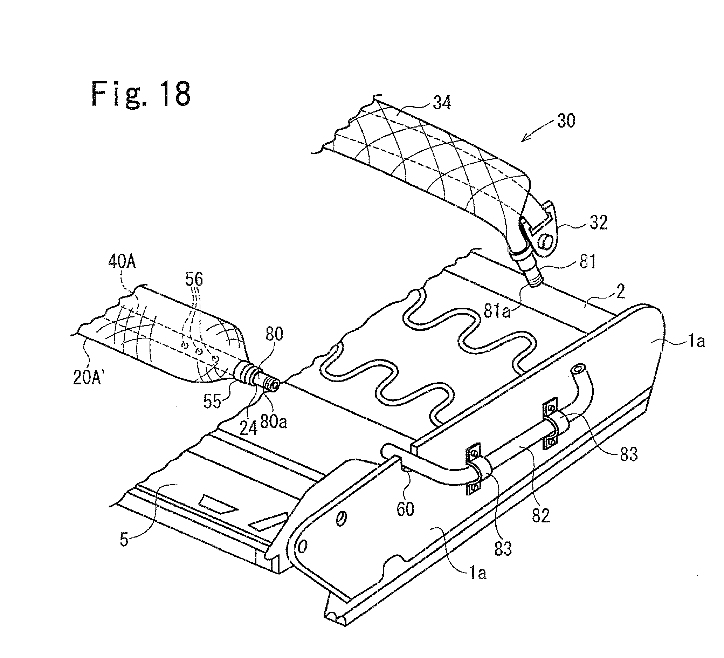

Figs. 17a to 17c illustrate a method for disposing an inflator and a seat bag side pipe inside a seat bag according to still another embodiment. Fig. 17a is a bottom view of a seat bag. Fig. 17b is a sectional view taken along line XVIIB-XVIIB of Fig. 17a showing an inflator and a seat bag side pipe being disposed inside the seat bag. Fig. 17c is a sectional view taken along line XVIIC-XVIIC of Fig. 17a showing the inflator and the seat bag side pipe disposed inside the seat bag. Fig. 18 is an exploded perspective view showing the constitution of pipes of this occupant restraining apparatus.

In the above-described embodiment, the inflator 40A is disposed inside the seat bag 20A through the pipe insertion opening 24 provided at one end of the seat bag 20A. In a seat bag 20A' of this embodiment, an inflator insertion opening 20b is provided in the undersurface thereof separately from the pipe insertion opening 24. As shown in Fig. 17a, the inflator insertion opening 20b is like a slit extending in the extending direction of the seat bag 20A', and is disposed near the center in the width direction and the extending direction of the undersurface of the seat bag 20A'.

In this embodiment, a fixing member 70 is attached to each of the front end (the nozzle 40a side) and the rear end of an inflator 40A. In the bottom surface of the seat bag 20A' are provided two bolt insertion holes 20a corresponding to the fixing members 70, 70 and through which stud bolts 72 of the fixing members 70 are to be passed. As shown, these bolt insertion holes 20a, 20a are disposed adjacent to the inflator insertion opening 20b. These bolt insertion holes 20a may be formed integrally with the inflator insertion opening 20b.

In this embodiment, as shown in Fig. 18, the seat bag 20A' and an air belt 30 (lap bag 34) are connected by a seat bag side pipe 80 connected to the seat bag 20A', an air belt side pipe 81 connected to the air belt 30 (lap bag 34), and a connecting pipe 82 connecting these.

One end of the seat bag side pipe 80 is connected to the inflator 40A inside the seat bag 20A', and the other end thereof is inserted into the pipe insertion opening 24 of the seat bag 20A' and extends toward the outside of the seat bag 20A'. Gas outlets 56 are provided in the outer peripheral surface of a portion of the seat bag side pipe 80 disposed inside the seat bag 20A'. A male screw portion is formed on the outer peripheral surface of the other end (hereinafter also referred to as the front end) of the seat bag side pipe 80.

One end of the air belt side pipe 81 is inserted into the lap bag 34 through a gas inlet 35 (reference numeral is omitted in Fig. 18), and the other end extends toward the outside of the lap bag 34. The connecting structure of the air belt side pipe 81 to the lap belt 34 is the same as the connecting structure between the pipe 50 and the lap bag 34 in the embodiment of Figs. 1 to 6. An male screw portion 81a is formed on the outer peripheral surface of the other end (hereinafter also referred to as the front end) of the air belt side pipe 81.

The connecting pipe 82 is a flexible pipe in this embodiment. As shown in Fig. 18, this connecting pipe 82 is disposed along the side surface of the side frame 1a and is fixed to the side frame 1a with fixing fittings 83. To each end of the connecting pipe 82 is attached a connecting fitting such as a flange nut (See Fig. 17c. Not shown in Fig. 18.). On the inner peripheral surfaces of the connecting fittings 82a are formed female screw portions 82c to be tightened onto the male screw portions 80a and 81a.

In this embodiment, the seat bag 20A' side end of the connecting pipe 82 extends to the seat pan 5 side via a groove 60 provided in the side frame 1a.

The connecting pipe 82 is integrated with the seat bag side pipe 80 and the air belt side pipe 81 by butting the front ends of the seat bag side pipe 80 and the air belt side pipe 81 against both ends of the connecting pipe 82 and tightening the connecting fittings 82a onto the male screw portions 80a and 81a, respectively.

In other respects, this embodiment is the same as the embodiment of Figs. 7 and 8. In Figs. 17a to 18, the same reference numerals are used to designate the same components as those in Figs. 7 and 8.

Next, a method for disposing the inflator 40A and the seat bag side pipe 80 inside the seat bag 20A' in this embodiment will be described.

In this embodiment, first, the pipes 80 to 82 are separated, and only the seat bag side pipe 80 is connected to the inflator 40A. The fixing members 70 are attached to the inflator 40A.

Next, as shown in Fig. 17b, the combination of the inflator 40A with the fixing members 70 and the seat bag side pipe 80 is inserted into the seat bag 20A' through the inflator insertion opening 20b in the bottom surface of the seat bag 20A', the front end of the seat bag side pipe 80 first.

Next, as shown in Fig. 17c, the front end of the seat bag side pipe 80 is made extend through the pipe insertion opening 24 at one end of the seat bag 20A' toward the outside of the seat bag 20A'. The periphery of the pipe insertion opening 24 is bound to the outer peripheral surface of the middle portion of the seat bag side pipe 80 with a band 55. The stud bolts 72 of the fixing members 70 are passed through the corresponding bolt insertion holes 20a in the bottom surface of the seat bag 20A' and are made extend toward the outside of the seat bag 20A'.

In this way, disposing of the inflator 40A and the seat bag side pipe 80 inside the seat bag 20A' is completed.

Separately from disposing of the inflator 40A and the seat bag side pipe 80 inside the seat bag 20A', the air belt side pipe 81 is connected to the lap bag 34, and the connecting pipe 82 is installed in the side frame 1a.

Thereafter, the seat bag 20A' is disposed on the seat pan 5, the fixing piece 21 (not shown) at the other end of the seat bag 20A' is fixed to the seat pan 5 with a bolt 22 (not shown), and the stud bolts 72 projecting from the bottom surface of the seat bag 20A' are fixed to the seat pan 5 by nuts (not shown). Thus, the seat bag 20A' is fixed to the seat pan 5.

Next, the front end of the seat bag side pipe 80 extending through the pipe insertion opening 24 toward the outside of the seat bag 20A' is connected to one end of the connecting pipe 82 with the connecting fitting 82a.

In addition, the lap anchor 32 is attached to the side frame 1a to join the air belt 30 to the side frame 1a. Thereafter, the front end of the air belt side pipe 81 communicated with the lap bag 34 is connected to the other end of the connecting pipe 82 with the connecting fitting 82a.

In this way, installation of the seat bag 20A' and the air belt 30 in the seat and connecting these are completed.

The seat bag 20A' and the air belt 30 may be installed in the seat after the seat bag side pipe 80 and the air belt side pipe 81 are connected to the connecting pipe 82.

In this embodiment, a pipe connecting the seat bag 20A' and the air belt 30 (lap bag 24) is composed of the seat bag side pipe 80, the air belt side pipe 81, and the connecting pipe 82 connecting these. Therefore, it is possible to separate the pipes 80 to 82, separately install the seat bag 20A' and the air belt 30 in the seat, and thereafter connect these with the connecting pipe 82. Compared to installing the seat bag 20A' and the air belt 30 connected with a pipe, installation can be performed more efficiently.

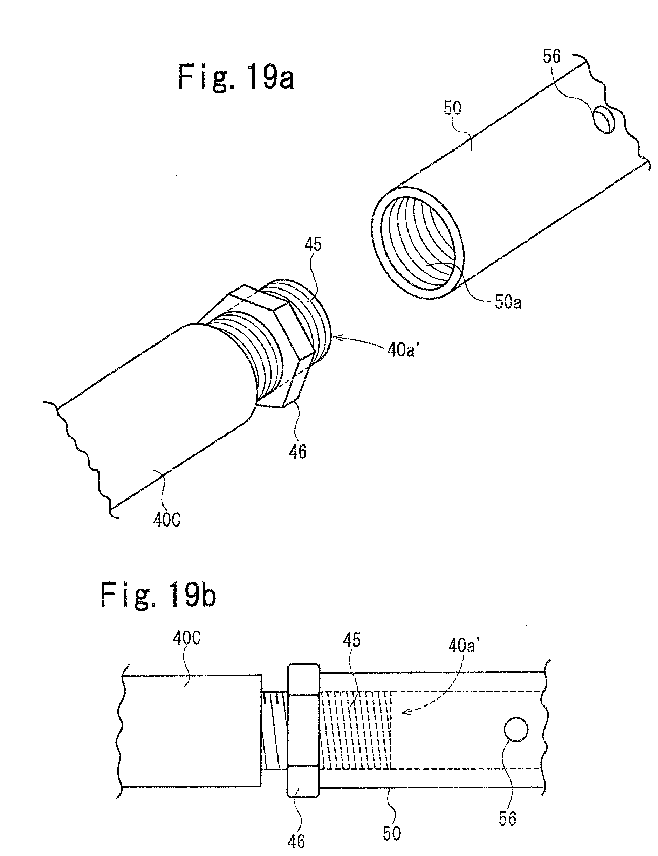

In the above-described embodiments, one end of the pipe 50 (or the seat bag side pipe 80, the same hereinafter) is fitted onto the nozzle 40a of the inflator 40A, the outer periphery thereof is bound with the band 54, and thereby the inflator 40A and the pipe 50 are connected. However, the connecting structure between the inflator 40A and the pipe 50 is not limited to this. Fig. 19a is an exploded perspective view showing a connecting structure between an inflator and a pipe in an occupant restraining apparatus according to another embodiment. Fig. 19b is a plan view of the junction between the inflator and the pipe.

In the embodiment of Figs. 19a and 19b, a male screw portion 45 is formed on the outer peripheral surface of the gas-ejecting nozzle 40a projecting from the front end of the inflator 40C, and a female screw portion 50a into which the male screw portion 45 is to be screwed is formed on the inner peripheral surface of one end of the pipe 50. At the distal end of the nozzle 40a' is provided a gas outlet (not shown). That is, in this embodiment, the inflator 40C and the pipe 50 are connected by screwing the nozzle 40' into one end of the pipe 50.

In this embodiment, in addition, a pipe-fixing nut 46 is screwed at the proximal end of the nozzle 40a. That is, by screwing the nozzle 40a' into the pipe 50 and thereafter tightening the nut 46 toward the pipe 50 like a so-called double nut as shown in Fig. 19b, the pipe 50 becomes unable to rotate (to move by screwing) and is fixed to the nozzle 40a.

At this time, by stopping screwing of the nozzle 40a' when the gas outlet 56 of the pipe 50 faces in a predetermined direction relative to the inflator 40C and then fixing the pipe 50 with the nut 46, the pipe 50 can be connected to the inflator 40C with the gas outlet 56 facing in a desired direction relative to the inflator 40C.

Although not shown, also in this embodiment, the inflator 40C is fixed to the seat pan from the outside of the seat bag with a fixing member 70 as in the above-described embodiments.

Although this embodiment shows a connecting structure between the inflator 40C and the pipe 50, such a double-nutlike connecting and fixing structure can also be used for the connecting structure between the seat bag side pipe 80 and the connecting pipe 82, and the connecting structure between the air belt side pipe 81 and the connecting pipe 82 in the embodiment of Figs. 17a to 18.

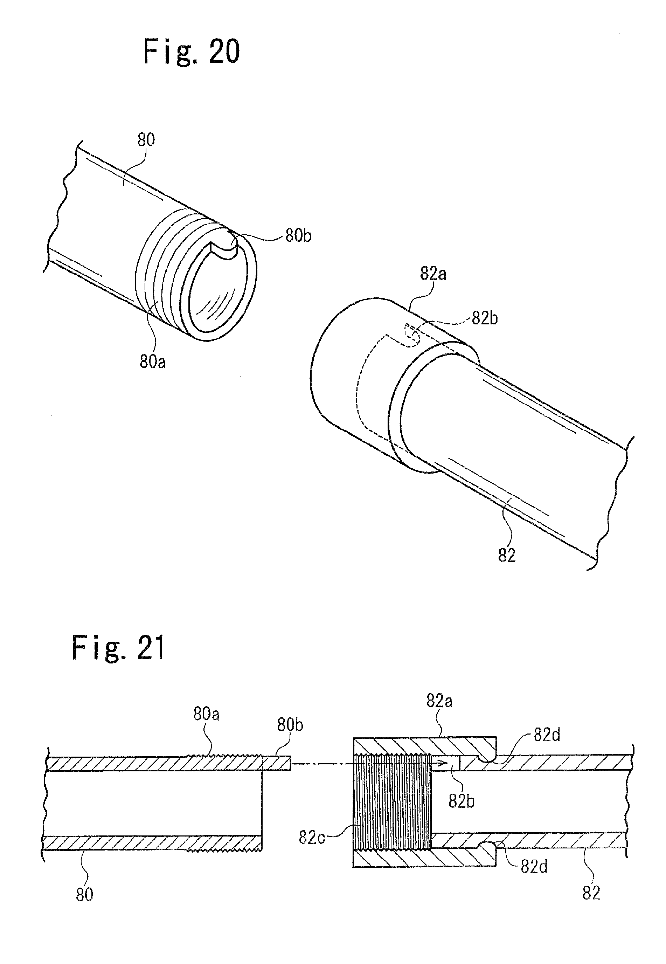

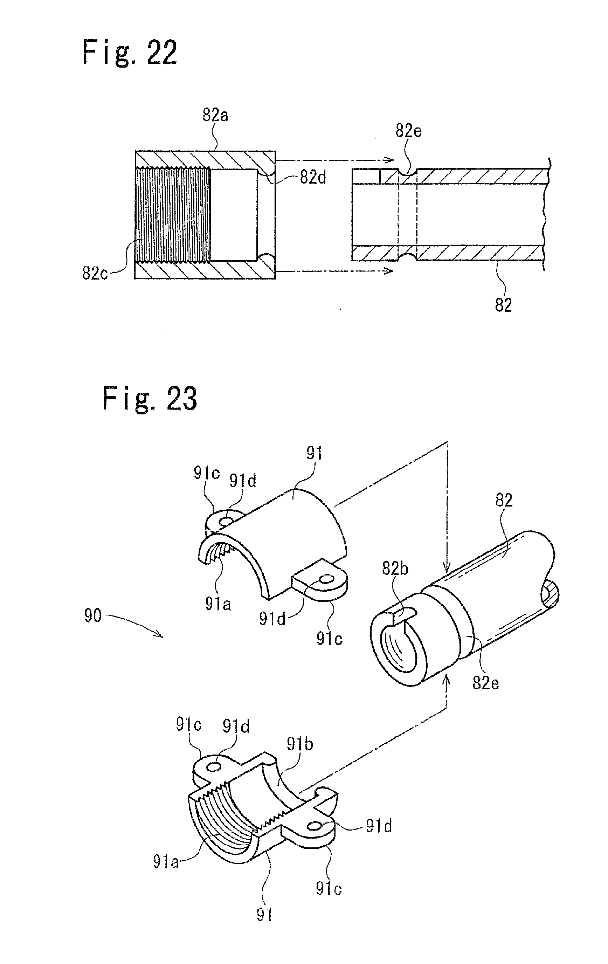

Fig. 20 is an exploded perspective view showing a connecting structure between a seat bag side pipe and a connecting pipe according to still another embodiment. Fig. 21 is a sectional view of the seat bag side pipe and the connecting pipe in the axial direction. Fig. 22 is an exploded sectional view of the connecting pipe and a connecting fitting.

In this embodiment, a positioning means with which positioning of the seat bag side pipe 80 in the circumferential direction relative to the connecting pipe 82 when the seat bag side pipe 80 and the connecting pipe 82 are connected, is provided.

The positioning means is composed of, in this embodiment, a projection 80b projecting from the front end of the seat bag side pipe 80 in the extending direction of the pipe 80, and a depression 82b formed by cutting out the front end edge of the connecting pipe 82 and engageable with the projection 80b. This projection 80b is disposed so as to be able to engage with the depression 82b when the seat bag side pipe 80 and the connecting pipe 82 at predetermined positions in the circumferential direction (phases) are butted against each other.

Also in this embodiment, a male screw portion 80a is formed on the outer peripheral surface of the front end of the seat bag side pipe 80. A connecting fitting 82a to be screwed onto the male screw portion 80a is attached to the front end of the connecting pipe 82.

Although a detailed description is omitted in the embodiment of Figs. 17 and 18, this connecting fitting 82a is a substantially cylindrical member fitted onto the front end of the connecting pipe 82. A female screw portion 82c to be tightened onto the male screw portion 80a is formed on the inner peripheral surface of the front end of the connecting fitting 82a. An internal-flange-like rib 82d projecting toward the axis of the connecting fitting 82a is formed on the inner peripheral surface of the rear end of the connecting fitting 82a. In addition, a groove 82e (Fig. 22) in which the rib 82d is to be slidably fitted is formed in the outer peripheral surface of the front end of the connecting pipe 82.

When this connecting fitting 82a is attached to the connecting pipe 82, the front end of the connecting pipe 82 is pressed into the connecting fitting 82a from the rear end of the connecting fitting 82a, and the rib 82d is fitted into the groove 82e. The connecting fitting 82a becomes unable to be separated from the connecting pipe 82. Thus, installation of the connecting fitting 82a in the connecting pipe 82 is completed. Since the rib 82d slides along the groove 82e, the connecting fitting 82a can rotate around the axis of the connecting pipe 82.

The depression 82b is covered by this connecting fitting 82a as shown in Fig. 21.

In other respects, this embodiment is the same as the embodiments of Figs. 17a to 18. In Figs. 20 to 22, the same reference numerals are used to designate the same components as those in Figs. 17a to 18.

In this embodiment, the seat bag side pipe 80 and the connecting pipe 82 are provided with the projection 80b and the depression 82b, respectively, which are to be engaged with each other when the seat bag side pipe 80 and the connecting pipe 82 are butted against each other. Therefore, even if the front end of the seat bag side pipe 80 (the male screw portion 80a) is slightly hidden in the pipe insertion opening 24 of the seat bag 20A and is difficult to see, these can be connected easily and appropriately.

In this embodiment, the seat bag side pipe 80 is provided with the projection 80b and the connecting pipe 82 is provided with the depression 82b. However, it is possible to provide a projection 80b in the connecting pipe 82 and to provide a depression 82b in the seat bag side pipe 80. Two or more projections 80b and two or more depressions 82b may be provided.

Although not shown, the junction between the air belt side pipe 81 and the connecting pipe 82 may also be provided with such a positioning means in the circumferential direction having a projection-depression fitting structure.

However, a pipe-to-pipe positioning means in the circumferential direction may have a structure other than such a projection-depression fitting structure.

Although not shown, the junction between the inflator and the pipe (or the seat bag side pipe) may also be provided with such a positioning means in the circumferential direction. In this case, the pipe and the inflator can be easily connected with the gas outlets of the pipe facing in a predetermined direction relative to the inflator.

In the above-described embodiment, the connecting fitting 82a is attached to the front end of the connecting pipe 82 by press fitting. However, the attaching structure of the connecting fitting to the connecting pipe is not limited to this. Fig. 23 is an exploded perspective view showing another constitution example of an attaching structure of a connecting fitting to a connecting pipe.

In the embodiment of Fig. 23, a cylindrical connecting fitting 90 is formed by integrating a pair of semicylindrical connecting fitting halves 91, 91.

Specifically, the connecting fitting halves 91 are like the connecting fitting 82a shown in Figs. 20 to 22 divided into one half and the other half in the circumferential direction. A female screw portion 91a is formed on the inner peripheral surface of the front end in the axial direction of each connecting fitting half 91. An internal-flange-like rib 91b projecting toward the axis is formed on the inner peripheral surface of the rear end in the axial direction of each connecting fitting half 91. When the connecting fitting halves 91, 91 are butted against each other, the female screw portions 91a, 91a become continuous with each other and become the equivalent of the female screw portion 82c in the connecting fitting 82a of the above-described embodiment. The ribs 91b, 91b also become continuous with each other and become the equivalent of the rib 82d in the connecting fitting 82a of the above-described embodiment.

In addition, as shown, auriform connecting pieces 91c are projecting from both ends in the circumferential direction of the outer peripheral surface of each connecting fitting half 91. The connecting piece 91c of one connecting fitting half 91 and the connecting piece 91c of the other connecting fitting half 91 are disposed so as to overlap when the connecting fitting halves 91, 91 are butted against each other. Reference numeral 91d denotes holes for insertion of screws or bolts joining the overlapped connecting pieces 91c, 91c.

When the connecting fitting 90 having such a constitution is attached to the connecting pipe 82, the connecting fitting halves 91, 91 are butted against each other with the connecting pipe 82 therebetween. At this time, the rib 91b of each connecting fitting half 91 is fitted into the groove 82e in the outer peripheral surface of the connecting pipe 82. Thereafter, the overlapped connecting pieces 91c, 91c of the connecting fitting halves 91 are joined with fixing members (not shown) such as screws or bolts passed through the holes 91d. In this way, the connecting fitting halves 91, 91 are integrated, and a connecting fitting 90 fitted onto the front end of the connecting pipe 82 is formed.

Since the ribs 91b are fitted in the groove 82e of the connecting pipe 82, this connecting fitting 90 is also prevented from coming off the front end of the connecting pipe 82. Since the ribs 91b slide along the groove 82e, this connecting fitting 90 can also rotate around the axis of the connecting pipe 82.

The method for connecting the connecting pipe 82 and the seat bag side pipe 80 using this connecting fitting 90 is the same as the embodiment of Figs. 20 to 22.

Of course, this connecting fitting 90 can be used not only for connecting the connecting pipe 82 and the seat bag side pipe 80 but also for connecting the connecting pipe 82 and the air belt side pipe 81.

The constitution of the connecting fitting that connects the pipes is not limited to the constitutions of the embodiments described above. Connecting fittings having other constitutions can be used.

The above-described embodiments are illustrative only, and the present invention is not limited to the above-described embodiments.
This application is based on Japanese patent application filed March 2, 2006 (Patent Application No. 2006-056513), which is hereby incorporated by reference in its entirety.

## Claims

1. An occupant restraining apparatus comprising:
an inflatable seat bag disposed inside or under a seat cushion of a vehicle seat and extending in the left-right width direction of the seat; and an inflatable air belt to be brought to the front of an occupant in the seat, the seat bag and the air belt being inflated by a common inflator,
wherein the seat bag and the air belt are communicated with each other via a gas flow pipe, and
the inflator is disposed inside the seat bag.

2. The occupant restraining apparatus according to Claim 1, wherein gas is supplied from the inflator to the seat bag, and the gas in the seat bag flows via the pipe into the air belt.

3. The occupant restraining apparatus according to Claim 2, wherein the pipe connects only the seat bag and the air belt.

4. The occupant restraining apparatus according to Claim 1, wherein one end of the pipe is disposed inside the seat bag, the inflator is connected to the one end of the pipe, and an outlet through which gas flows into the seat bag is provided in a portion of the pipe inside the seat bag.

5. The occupant restraining apparatus according to Claim 4, wherein at least one of the inflator and the pipe is provided with a positioning means with which positioning of the pipe in the circumferential direction relative to the inflator is performed when the inflator and the pipe are connected.

6. The occupant restraining apparatus according to Claim 5, wherein the positioning means includes a projection provided in one of the inflator and the pipe, and a depression provided in the other and to be engaged with the projection.

7. The occupant restraining apparatus according to Claim 4, wherein the inflator is provided with a male screw portion, a gas ejecting portion is provided at the distal end of the male screw portion, a female screw portion into which the male screw portion is to be screwed is provided on the inner peripheral surface of the one end of the pipe, the inflator and the pipe are connected by screwing the male screw portion into the female screw portion, a pipe-fixing nut is screwed at the proximal end of the male screw portion, and the pipe is fixed so as not to rotate around the axis of the male screw portion by tightening the nut toward the pipe.

8. The occupant restraining apparatus according to Claim 1, wherein the pipe passes through the seat bag in the direction in which the seat bag extends, both ends of the seat bag in its extending direction are fixed to the pipe, the inflator is installed in the pipe, and an outlet through which gas flows into the seat bag is provided in a portion of the pipe inside the seat bag.

9. The occupant restraining apparatus according to Claim 1, wherein a seat side member is provided with an engaging portion with which the pipe engages.

10. The occupant restraining apparatus according to Claim 9, wherein the engaging portion is a groove provided in the seat side member.

11. The occupant restraining apparatus according to Claim 10, wherein the groove tapers and becomes narrower than the diameter of the pipe toward the bottom.

12. The occupant restraining apparatus according to Claim 10, wherein at least one of the side surfaces of the groove is provided with a projection hanging over the pipe disposed in the groove.

13. The occupant restraining apparatus according to Claim 10, wherein at least part of the pipe is a small diameter portion having a diameter smaller than the diameter of other parts of the pipe, and the groove has a size that allows the small diameter portion of the pipe to enter but does not allow the parts other than the small diameter portion to enter.

14. The occupant restraining apparatus according to Claim 1, wherein the pipe includes at least a seat bag side pipe connected to the seat bag, an air belt side pipe connected to the air belt, and a connecting pipe connecting the seat bag side pipe and the air belt side pipe.

15. The occupant restraining apparatus according to Claim 14, wherein at least one of the seat bag side pipe and the connecting pipe is provided with a positioning means with which positioning of one of the pipes in the circumferential direction relative to the other is performed when the pipes are connected.

16. The occupant restraining apparatus according to Claim 15, wherein the positioning means includes a projection provided in one of the seat bag side pipe and the connecting pipe, and a depression provided in the other and to be engaged with the projection.
